# EUROPEAN PATENT APPLICATION

(11) **EP 4 779 910 A1**
(43) Date of publication of application: **22.07.2026**
(21) Application number: 24884892.1
(22) Date of filing: 31.10.2024
(51) Int. Cl.: H04L 1/00, H04W 24/10

(54) **COMMUNICATION METHOD AND RELATED APPARATUS**

(30) Priority: 03.11.2023 CN 202311466425
(71) Applicant: HUAWEI TECHNOLOGIES CO., LTD., Shenzhen 518129 (CN)
(72) Inventor: WANG, Xiaona, Shenzhen, Guangdong 518129 (CN); FAN, Bo, Shenzhen, Guangdong 518129 (CN); YUAN, Shitong, Shenzhen, Guangdong 518129 (CN)
(74) Representative: MERH-IP Matias Erny Reichl Hoffmann Patentanwälte PartG mbB
(86) International application number: PCT/CN2024/128853
(87) International publication number: WO 2025/092892

(57) **Abstract**

This application provides a communication method and a communication apparatus, relating to the field of communication technologies. In the technical solution provided in this application, a terminal device indicates, via an uplink control channel, a difference between an actual channel state of a downlink data channel and a historical channel state of the downlink data channel, enabling a network device to quickly adjust, based on the difference, an MCS for downlink data channel scheduling. This helps reduce service data transmission delay and data retransmissions, thereby conserving spectrum resources.

## Description

This application claims priority to Chinese Patent Application No. 202311466425.7, filed with the China National Intellectual Property Administration on November 3, 2023 and entitled "COMMUNICATION METHOD AND RELATED APPARATUS", which is incorporated herein by reference in its entirety.

### TECHNICAL FIELD

This application relates to the field of communication technologies, and in particular, to a communication method and a related apparatus.

### BACKGROUND

In a communication system, the base station side configures pilot resources for the user side to measure downlink channel state information (channel state information, CSI). The user side receives the pilot resources, obtains downlink CSI, and reports the downlink CSI to the base station side. Based on the downlink CSI reported, the base station side determines a modulation and coding scheme (modulation and coding scheme, MCS) for downlink data transmission.

Because CSI measurement and reporting are performed only at specific intervals, there is a time difference between downlink data transmission on the user side and the most recent CSI measurement. In other words, channel aging occurs. To address this, ACK (acknowledgement)/NACK (negative acknowledgment) feedback-based link adaptation is usually used to adjust, in real time, the MCS for data transmission. For example, the user side receives and demodulates downlink data. If decoding succeeds, the user side feeds back an ACK, and the base station side determines that the current channel quality is higher than the MCS requirement used for data transmission and therefore increases the MCS for the next data transmission. If demodulation fails, the user side feeds back a NACK, and the base station side determines that current channel quality is lower than the MCS requirement used for the data transmission and therefore decreases MCS for the next data transmission. After a plurality of ACK/NACK feedbacks and adjustments, the base station side maximizes system capacity of the user side under current channel conditions.

This ACK/NACK feedback-based link adaptation requires a plurality of data transmissions and corresponding ACK/NACK feedbacks to adjust the data transmission MCS to match the current channel quality, resulting in a long adjustment delay and limited communication performance improvement. For example, in a case of burst traffic, data transmission often completes before the data transmission MCS converges to the current channel condition, leading to low air interface channel utilization on the user side and poor user-perceived rate experience.

### SUMMARY

This application provides a communication method, a communication apparatus, and a communication system, that reduce link adaptation delay and enable quick, accurate adjustment of downlink data channel scheduling, thereby improving communication performance.

According to a first aspect, this application provides a communication method and a related apparatus. The method is applied to a terminal. The method includes: receiving a downlink data channel; and sending an uplink control channel, where the uplink control channel carries link adaptation information, and the link adaptation information indicates a difference between a first channel state of the downlink data channel and a second channel state of the downlink data channel.

According to a second aspect, this application provides a communication method. The method is applied to a network device. The method includes: sending a downlink data channel; and receiving an uplink control channel, where the uplink control channel carries link adaptation information, and the link adaptation information indicates a difference between a first channel state of the downlink data channel and a second channel state of the downlink data channel.

In a possible implementation of the first aspect or the second aspect, the first channel state includes one or more of the following parameters: channel quality measured by a DMRS for the downlink data channel, an actual BLER of the downlink data channel, or channel quality at a receiving moment of the downlink data channel.

In a possible implementation of the first aspect or the second aspect, the second channel state includes one or more of the following parameters: channel quality referenced during scheduling of the downlink data channel, a target BLER of the downlink data channel, or channel quality corresponding to an MCS scheduled for the downlink data channel.

The channel quality measured by the DMRS for the downlink data channel may be understood as the channel quality obtained by measuring the DMRS of the downlink data channel. The channel quality referenced during scheduling of the downlink data channel may be understood as the channel quality referenced for determining a scheduling scheme of the downlink data channel, for example, channel quality referenced during determining an MCS.

In an example, from another perspective, the second channel state is a historical channel state of the downlink data channel, that is, a channel state of the downlink data channel at an earlier time, and the first channel state is the current real-time quality of the downlink data channel. When a channel condition changes, there is usually a difference between the second channel state and the first channel state.

From the perspective of the terminal side, a difference between the historical channel state of the downlink data channel and the real-time channel state of the downlink data channel is indicated to the network device via the uplink control channel, enabling the network device to learn the difference and to accurately and promptly adjust a subsequent scheduling scheme of the downlink data channel based on the difference, for example, to accurately and promptly adjust a subsequent MCS of the downlink data channel, thereby reducing the link adaptation delay and improving communication efficiency.

From the perspective of the network device side, in the method, the network device may learn a difference, indicated via the uplink control channel, between the channel quality referenced during scheduling of the downlink data channel and the channel quality measured by the DMRS for the downlink data channel, so that it can accurately and promptly adjust the subsequent scheduling scheme of the downlink data channel based on the difference, for example, to accurately and promptly adjust a subsequent MCS of the downlink data channel, thereby reducing the link adaptation delay and improving the communication efficiency.

In some possible implementations of the first aspect or the second aspect, the difference between the first channel state and the second channel state may be quantized as one or more of the following parameters: RSRP, an SINR, a CQI, an MCS, or a BLER.

In other words, the link adaptation information may specifically include one or more of the following parameters: the RSRP, the SINR, the CQI, the MCS, or the BLER, to indicate the difference between the first channel state and the second channel state by using these parameters.

In this implementation, one or more parameters of the RSRP, the SINR, the CQI, the MCS, and the BLER are reused to indicate the difference between the first channel state and the second channel state, to reduce implementation complexity of a technical solution for indicating the difference.

In some possible implementations of the first aspect or the second aspect, the link adaptation information has a mapping relationship with one or more of the following parameters: a sequence cyclic shift value of the uplink control channel, an initial cyclic shift value of the uplink control channel, HARQ-ACK information for the downlink data channel, a quantity of symbols occupied by the uplink control channel, a quantity of RBs occupied by the uplink control channel, or a quantity of codewords carried by the downlink data channel.

In other words, the link adaptation information may be carried by one or more of the following information: the sequence cyclic shift value of the uplink control channel, the initial cyclic shift value of the uplink control channel, the HARQ-ACK information for the downlink data channel, the quantity of symbols occupied by the uplink control channel, the quantity of resource blocks RBs occupied by the uplink control channel, or the quantity of codewords carried by the downlink data channel.

From another perspective, one or more of the following parameters may be determined based on the link adaptation information: the sequence cyclic shift value of the uplink control channel, the initial cyclic shift value of the uplink control channel, the HARQ-ACK information for the downlink data channel, the quantity of symbols occupied by the uplink control channel, the quantity of RBs occupied by the uplink control channel, or the quantity of codewords carried by the downlink data channel.

In this implementation, the link adaptation information is carried or indicated by one or more of the sequence cyclic shift value of the uplink control channel, the initial cyclic shift value of the uplink control channel, the HARQ-ACK information for the downlink data channel, the quantity of symbols occupied by the uplink control channel, the quantity of RBs occupied by the uplink control channel, and the quantity of codewords carried by the downlink data channel, without adding new message or information, to reduce signaling overheads.

When there is a mapping relationship between the link adaptation information and the HARQ-ACK information for the downlink data channel, for example, when the HAQR-ACK information indicates a negative acknowledgment NACK, the link adaptation information may represent that the first channel state of the downlink data channel is worse than the second channel state of the downlink data channel; when the HAQR-ACK information indicates an acknowledgment ACK, the link adaptation information may represent that the first channel state of the downlink data channel is better than the second channel state of the downlink data channel.

In some possible implementations of the first aspect or the second aspect, the HAQR-ACK information for the downlink data channel and the link adaptation information are carried by a same sequence.

In other words, the uplink control channel carries the HAQR-ACK information for downlink data, and also carries the link adaptation information for the downlink data channel. In addition, the HAQR-ACK information for the downlink data channel and the link adaptation information are carried by the same sequence in the uplink control channel.

In some possible implementations of the first aspect or the second aspect, the HAQR-ACK information for the downlink data channel and the link adaptation information are carried by different sequences.

In other words, the uplink control channel carries the HAQR-ACK information for downlink data, and also carries the link adaptation information for the downlink data channel. In addition, the HAQR-ACK information for the downlink data channel and the link adaptation information are carried by the different sequences in the uplink control channel.

In some possible implementations of the first aspect or the second aspect, a relationship between a cyclic shift value mapped to the link adaptation information and a cyclic shift value mapped to the HAQR-ACK information for the downlink data channel is as follows: mapped initial cyclic shift values and/or mapped sequence shift values are different.

In an example, the relationship between the cyclic shift value mapped to the link adaptation information and the cyclic shift value mapped to the HAQR-ACK information for the downlink data channel is as follows: The mapped initial cyclic shift values are the same, and the mapped sequence shift values are different.

In other words, the uplink control channel carries the HAQR-ACK information for the downlink data, and also carries the link adaptation information for the downlink data channel. In addition, an initial cyclic shift value mapped to the link adaptation information is the same as an initial cyclic shift value mapped to the HAQR-ACK information for the downlink data channel, and a sequence shift value mapped to the link adaptation information is different from a sequence shift value mapped to the HAQR-ACK information for the downlink data channel.

In an example, the relationship between the cyclic shift value mapped to the link adaptation information and the cyclic shift value mapped to the HAQR-ACK information for the downlink data channel is as follows: The mapped initial cyclic shift values are different, and the mapped sequence shift values are different.

In other words, the uplink control channel carries the HAQR-ACK information for the downlink data, and also carries the link adaptation information for the downlink data channel. In addition, an initial cyclic shift value mapped to the link adaptation information is different from an initial cyclic shift value mapped to the HAQR-ACK information for the downlink data channel, and a sequence shift value mapped to the link adaptation information is the same as a sequence shift value mapped to the HAQR-ACK information for the downlink data channel.

In some possible implementations of the first aspect or the second aspect, when the quantity of symbols occupied by the uplink control channel is greater than 1, different symbols are sent via a same sequence.

In other words, when there is a mapping relationship between the link adaptation information and the quantity of symbols occupied by the uplink control channel, if the quantity of symbols occupied by the uplink control channel is greater than 1, for example, 2, different symbols may be sent via a same sequence.

In some possible implementations of the first aspect or the second aspect, when the quantity of symbols occupied by the uplink control channel is greater than 1, different symbols are sent via different sequences.

In other words, when there is a mapping relationship between the link adaptation information and the quantity of symbols occupied by the uplink control channel, if the quantity of symbols occupied by the uplink control channel is greater than 1, for example, 2, different symbols may be sent via different sequences.

In some possible implementations of the first aspect or the second aspect, when the quantity of codewords carried by the downlink data channel is greater than 1, different codewords correspond to same link adaptation information.

In other words, when there is a mapping relationship between the link adaptation information and the quantity of codewords carried by the uplink control channel, if the quantity of codewords is greater than 1, for example, 2, different codewords correspond to same link adaptation information.

In some possible implementations of the first aspect or the second aspect, when the quantity of codewords carried by the downlink data channel is greater than 1, different codewords correspond to different link adaptation information.

In other words, when there is a mapping relationship between the link adaptation information and the quantity of codewords carried by the uplink control channel, if the quantity of codewords is greater than 1, for example, 2, different codewords correspond to different link adaptation information.

In some possible implementations of the first aspect, a plurality of RBs are allocated to the uplink control channel. Sending the downlink control channel includes: selecting, based on the HAQR-ACK information and the link adaptation information, an RB from the plurality of RBs to send the uplink control channel.

In other words, when there is a mapping relationship between the link adaptation information and the RBs occupied by the uplink control channel, a corresponding RB is selected from the plurality of RBs based on the HAQR-ACK information and the link adaptation information to send the uplink control channel.

The plurality of RBs are allocated to the uplink control channel, and may be understood as available RBs configured for the uplink control channel.

In some possible implementations of the second aspect, a plurality of RBs are allocated to the uplink control channel. The method may further include: determining, based on RBs occupied by the uplink control channel, the HAQR-ACK information and the link adaptation information that are carried by the uplink control channel.

In other words, when there is a mapping relationship between the link adaptation information and the RBs occupied by the uplink control channel, the HAQR-ACK information and the link adaptation information that are carried by the uplink control channel are determined based on the RBs occupied by the uplink control channel.

According to a third aspect, this application provides a communication apparatus, including a module or a unit configured to implement the method according to the first aspect and any possible implementation of the first aspect. It should be understood that each module or unit may implement a corresponding function by executing a computer program.

According to a fourth aspect, this application provides a communication apparatus, including a module or a unit configured to implement the method according to the second aspect and any possible implementation of the second aspect. It should be understood that each module or unit may implement a corresponding function by executing a computer program.

According to a fifth aspect, this application provides a communication apparatus, including a processor. The processor is configured to perform the communication method according to the first aspect or any possible implementation of the first aspect. The communication apparatus may be a chip or a chip system used in a terminal device.

The apparatus may further include a memory configured to store instructions and data. The memory is coupled to the processor. When the processor executes the instructions stored in the memory, the method described according to the first aspect or any possible implementation of the first aspect may be implemented. The apparatus may further include a communication interface. The communication interface is used by the apparatus to communicate with another device. For example, the communication interface may be a transceiver, a circuit, a bus, a module, or another type of communication interface.

According to a sixth aspect, this application provides a communication apparatus, including a processor. The processor is configured to perform the communication method according to the second aspect or any possible implementation of the second aspect. The communication apparatus may be a chip or a chip system used in a network device.

The apparatus may further include a memory configured to store instructions and data. The memory is coupled to the processor. When the processor executes the instructions stored in the memory, the method described according to the second aspect or any possible implementation of the second aspect may be implemented. The apparatus may further include a communication interface. The communication interface is used by the apparatus to communicate with another device. For example, the communication interface may be a transceiver, a circuit, a bus, a module, or another type of communication interface.

According to a seventh aspect, this application provides a computer-readable storage medium. The computer-readable storage medium stores program code to be executed by a communication apparatus. The program code includes instructions used for implementing the method according to the first aspect and any possible implementation of the first aspect.

According to an eighth aspect, this application provides a computer-readable storage medium. The computer-readable storage medium stores program code to be executed by a communication apparatus. The program code includes instructions used for implementing the method according to the second aspect and any possible implementation of the second aspect.

According to a ninth aspect, this application provides a computer program product including instructions. When the computer program product runs on a communication apparatus, the communication apparatus is enabled to implement the method according to the first aspect and any possible implementation of the first aspect.

According to a tenth aspect, this application provides a computer program product including instructions. When the computer program product runs on a communication apparatus, the communication apparatus is enabled to implement the method according to the second aspect and any possible implementation of the second aspect.

According to an eleventh aspect, this application provides a communication system. The communication system includes a communication apparatus configured to implement the method according to the first aspect and any possible implementation of the first aspect and/or a communication apparatus configured to implement the method according to the second aspect and any possible implementation of the second aspect.

### BRIEF DESCRIPTION OF DRAWINGS

FIG. 1 is a diagram of a communication system to which a method is applicable according to an embodiment of this application;
FIG. 2 is a diagram of another communication system to which a method is applicable according to an embodiment of this application;
FIG. 3 is a schematic flowchart of a communication method according to an embodiment of this application;
FIG. 4 is a schematic flowchart of a communication method according to an embodiment of this application;
FIG. 5 is a diagram of a structure of a communication apparatus according to an embodiment of this application; and
FIG. 6 is a diagram of a structure of a communication apparatus according to another embodiment of this application.

### DESCRIPTION OF EMBODIMENTS

The following describes the technical solutions in embodiments of this application with reference to the accompanying drawings in embodiments of this application.

To clearly describe the technical solutions in embodiments of this application, terms such as "first" and "second" are used in embodiments of this application to distinguish between same items or similar items that provide basically same functions and purposes. A person skilled in the art may understand that the terms such as "first" and "second" do not limit a quantity or an execution sequence, and the terms such as "first" and "second" do not indicate a definite difference.

It should be noted that, in embodiments of this application, terms such as "example" or "for example" indicate giving an example, an illustration, or a description. Any embodiment or design scheme described as an "example" or "for example" in this application should not be explained as being more preferred or having more advantages than another embodiment or design scheme. Exactly, use of the terms such as "example" or "for example" is intended to present a related concept in a specific manner.

In embodiments of this application, "at least one" means one or more, and "a plurality of" means two or more. "And/or" describes an association relationship of associated objects, and indicates that three relationships may exist. For example, A and/or B may indicate the following three cases: Only A exists, both A and B exist, and only B exists, where A and B may be singular or plural. A character "/" generally indicates an "or" relationship between the associated objects. "At least one of the following items (pieces)" or a similar expression thereof indicates any combination of these items, including a single item (piece) or any combination of a plurality of items (pieces). For example, at least one item (piece) of a, b, and (or) c may indicate a, b, c, a and b, a and c, b and c, or a, b, and c, where a, b, and c may be singular or plural.

For ease of understanding a communication method provided in embodiments of this application, the following describes a system architecture and an application scenario of the communication method provided in embodiments of this application. It may be understood that the system architecture and the application scenario described in embodiments of this application are intended to describe the technical solutions in embodiments of this application more clearly, and do not constitute a limitation on the technical solutions provided in embodiments of this application.

The technical solutions provided in this application may be applied to various communication systems, for example, a 5^{th} generation (5^{th} generation, 5G) or new radio (new radio, NR) system, a long term evolution (long term evolution, LTE) system, an LTE frequency division duplex (frequency division duplex, FDD) system, an LTE time division duplex (time division duplex, TDD) system, a wireless local area network (wireless local area network, WLAN) system, a satellite communication system, a future communication system, for example, a 6^{th} generation (6^{th} generation, 6G) mobile communication system, or a system integrating a plurality of systems. The technical solutions provided in this application may be further applied to device-to-device (device-to-device, D2D) communication, vehicle-to-everything (vehicle-to-everything, V2X) communication, machine-to-machine (machine-to-machine, M2M) communication, machine type communication (machine type communication, MTC), an Internet of Things (Internet of Things, IoT) communication system, or another communication system.

A device in a communication system may send a signal to another device or receive a signal from another device. The signal may include information, signaling, data, or the like. The device may alternatively be replaced with an entity, a network entity, a communication device, a communication module, a node, a communication node, or the like. In this application, the device is used as an example for description. For example, a communication system may include at least one terminal device and at least one network device. The network device may send a downlink signal to the terminal device, and/or the terminal device may send an uplink signal to the network device.

In embodiments of this application, the terminal device may also be referred to as user equipment (user equipment, UE), an access terminal, a subscriber unit, a subscriber station, a mobile station, a remote station, a remote terminal, a mobile device, a user terminal, a terminal, a wireless communication device, a user agent, or a user apparatus.

The terminal device may be a device that provides a voice/data, for example, a handheld device or a vehicle-mounted device with a wireless connection function. Currently, some examples of the terminal are a mobile phone (mobile phone), a tablet computer, a notebook computer, a palmtop computer, a mobile Internet device (mobile Internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a compute device or another processing device connected to a wireless modem, a wearable device, a terminal device in a 5G network, a terminal device in a future evolved public land mobile network (public land mobile network, PLMN), or the like. This is not limited in embodiments of this application.

By way of example and not limitation, in embodiments of this application, the terminal device may alternatively be a wearable device. The wearable device may also be referred to as a wearable intelligent device, and is a general term of wearable devices, for example, glasses, gloves, watches, clothing, and shoes, that are developed by applying wearable technologies to intelligent designs for daily wear. The wearable device is a portable device that is directly worn on a body or integrated into clothes or an accessory of a user. The wearable device is not merely a hardware device, but further implements a powerful function through software support, data exchange, and cloud-based interaction. In a broad sense, wearable intelligent devices include full-featured and large-sized devices that can implement all or some of functions without depending on smartphones, for example, smart watches or smart glasses, and include devices that focus only on a specific type of application function and need to be used together with other devices such as smartphones, for example, various smart bands and smart jewelry for monitoring physical signs.

In embodiments of this application, an apparatus configured to implement a function of the terminal device may be the terminal device, or may be an apparatus that can support the terminal device in implementing the function, for example, a chip system. The apparatus may be mounted in the terminal device or used in combination with the terminal device. In embodiments of this application, a chip system may include a chip, or may include a chip and another discrete component. In embodiments of this application, an example in which the apparatus configured to implement the function of the terminal device is the terminal device is merely used for description, and does not constitute a limitation on the solutions in embodiments of this application.

The network device in embodiments of this application may be a device configured to communicate with the terminal device. The network device may also be referred to as an access network device or a radio access network device. For example, the network device may be a base station. The network device in embodiments of this application may be a radio access network (radio access network, RAN) node (or device) that connects the terminal device to a wireless network. The base station may cover the following names in a broad sense, or may be replaced with the following names, for example, a NodeB (NodeB), an evolved NodeB (evolved NodeB, eNB), a next generation NodeB (next generation NodeB, gNB), a relay station, an access point, a transmission point (transmission reception point, TRP), a transmission point (transmission point, TP), a primary station, a secondary station, a multi-standard radio (multi-standard radio, MSR) node, a home base station, a network controller, an access node, a radio node, an access point (access point, AP), a transmission node, a transceiver node, a baseband unit (baseband unit, BBU), a remote radio unit (remote radio unit, RRU), an active antenna unit (active antenna unit, AAU), a remote radio head (remote radio head, RRH), a central unit (central unit, CU), a distributed unit (distributed unit, DU), a radio unit (radio unit, RU), and a positioning node. The base station may be a macro base station, a micro base station, a relay node, a donor node, or the like, or a combination thereof. The base station may alternatively be a communication module, a modem, or a chip disposed in the foregoing device or apparatus. The base station may alternatively be a mobile switching center, a device that bears a base station function in D2D, V2X, and M2M communication, a network side device in a 6G network, a device that bears a base station function in a future communication system, or the like. The base station may support networks using a same access technology or different access technologies. Optionally, a RAN node may alternatively be a server, a wearable device, a vehicle, a vehicle-mounted device, or the like. For example, an access network device in a vehicle-to-everything (vehicle-to-everything, V2X) technology may be a roadside unit (roadside unit, RSU). A specific technology and a specific device form that are used by the network device are not limited in embodiments of this application. In some deployments, the network device mentioned in embodiments of this application may be a CU, a DU, a device including a CU and a DU, or a device including a control plane CU node (a central unit control plane (central unit control plane, CU-CP)), a user plane CU node (a central unit user plane (central unit user plane, CU-UP)), and a DU node. For example, the network device may include a gNB-CU-CP, a gNB-CU-UP, and a gNB-DU.

In some deployments, a plurality of RAN nodes cooperate to assist the terminal in implementing radio access, and different RAN nodes respectively implement some functions of the base station. For example, the RAN node may be a CU, a DU, a CU-CP, a CU-UP, or an RU. The CU and the DU may be separately disposed, or may be included in a same network element, for example, a BBU. The RU may be included in a radio frequency device or a radio frequency unit, for example, included in an RRU, an AAU, or an RRH.

The RAN node may support one or more types of fronthaul interfaces, and different fronthaul interfaces respectively correspond to DUs and RUs having different functions. If a fronthaul interface between the DU and the RU is a common public radio interface (common public radio interface, CPRI), the DU is configured to implement one or more baseband functions, and the RU is configured to implement one or more radio frequency functions. If a fronthaul interface between the DU and the RU is another type of interface, in comparison with a CPRI, the interface performs transfer of some downlink and/or uplink baseband functions. For example, for downlink, one or more of precoding (precoding), digital beamforming (beamforming, BF), or inverse fast Fourier transform (inverse fast Fourier transform, IFFT)/cyclic prefix (cyclic prefix, CP) addition is moved from the DU to the RU for implementation; and for uplink, one or more of digital beamforming (beamforming, BF) or fast Fourier transform (fast Fourier transform, FFT) /cyclic prefix (cyclic prefix, CP) removal is moved from the DU to the RU for implementation. In a possible implementation, the interface may be an enhanced common public radio interface (enhanced common public radio interface, eCPRI). In an eCPRI architecture, split manners between the DU and the RU are different, corresponding to different categories (categories, Cats) of eCPRIs, for example, eCPRI Cats A, B, C, D, E, and F.

eCPRI Cat A is used as an example. For downlink transmission, with layer mapping as a splitting point, the DU is configured to implement the layer mapping and one or more functions before the layer mapping (that is, one or more of encoding, rate matching, scrambling, modulation, or the layer mapping), and another function after the layer mapping (for example, one or more of RE (resource element, resource element) mapping, digital beamforming (beamforming, BF), or inverse fast Fourier transform (inverse fast Fourier transform, IFFT) /cyclic prefix (cyclic prefix, CP) addition) is moved to the RU for implementation. For uplink transmission, with RE demapping as a splitting point, the DU is configured to implement the demapping and one or more functions before the demapping (that is, one or more of the following functions: decoding, de-rate matching, descrambling, demodulation, inverse discrete Fourier transform (inverse discrete Fourier transform, IDFT), channel equalization, or the RE demapping), and another function after the demapping (for example, one or more of digital BF or fast Fourier transform (fast Fourier transform, FFT) /CP removal) is moved to the RU for implementation. It may be understood that, for function descriptions of DUs and RUs corresponding to various categories of eCPRIs, refer to the eCPRI protocol. Details are not described herein.

In a possible design, a processing unit configured to implement a baseband function in the BBU is referred to as a baseband high (baseband high, BBH) unit, and a processing unit configured to implement a baseband function in the RRU/AAU/RRH is referred to as a baseband low (baseband low, BBL) unit.

In different systems, the CU (or the CU-CP and the CU-UP), the DU, or the RU may also have different names, but a person skilled in the art may understand meanings thereof. For example, in an ORAN (Open Radio Access Network, open radio access network) system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. In this application, any unit in the CU (or the CU-CP or the CU-UP), the DU, and the RU may be implemented by using a software module, a hardware module, or a combination of the software module and the hardware module.

In embodiments of this application, an apparatus configured to implement a function of the network device may be the network device, or may be an apparatus that can support the network device in implementing the function, for example, a chip system, a hardware circuit, a software module, or a combination of a hardware circuit and a software module. The apparatus may be mounted in the network device or used in combination with the network device. In embodiments of this application, an example in which the apparatus configured to implement the function of the network device is the network device is merely used for description, and does not constitute a limitation on the solutions in embodiments of this application.

The network device and/or the terminal device may be deployed on land, including an indoor device, an outdoor device, a handheld device, or a vehicle-mounted device; may be deployed on water; or may be deployed on a plane, a balloon, and a satellite in the air. A scenario in which the network device and the terminal device are located is not limited in embodiments of this application. In addition, the terminal device and the network device may be hardware devices; may be software functions running on dedicated hardware, or software functions running on general-purpose hardware, for example, virtualized functions instantiated on a platform (for example, a cloud platform); or may be entities including a dedicated or general-purpose hardware device and a software function. Specific forms of the terminal device and the network device are not limited in this application.

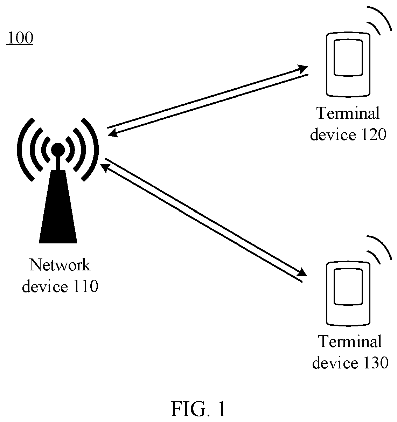

FIG. 1 is a diagram of a communication system to which a method is applicable according to an embodiment of this application. As shown in FIG. 1, the communication system 100 may include at least one network device, for example, a network device 110 shown in FIG. 1. The communication system 100 may further include at least one terminal device, for example, a terminal device 120 and a terminal device 130 shown in FIG. 1.

The network device 110 may communicate with the terminal device 120 and the terminal device 130 through radio links. Communication devices in the communication system, for example, the network device 110, the terminal device 120, and the terminal device 130, may communicate with each other by using a multi-antenna technology.

In an example, a single network device may transmit data or control signaling to a single or a plurality of terminal devices, and/or a plurality of network devices may simultaneously transmit data or control signaling to a single terminal device.

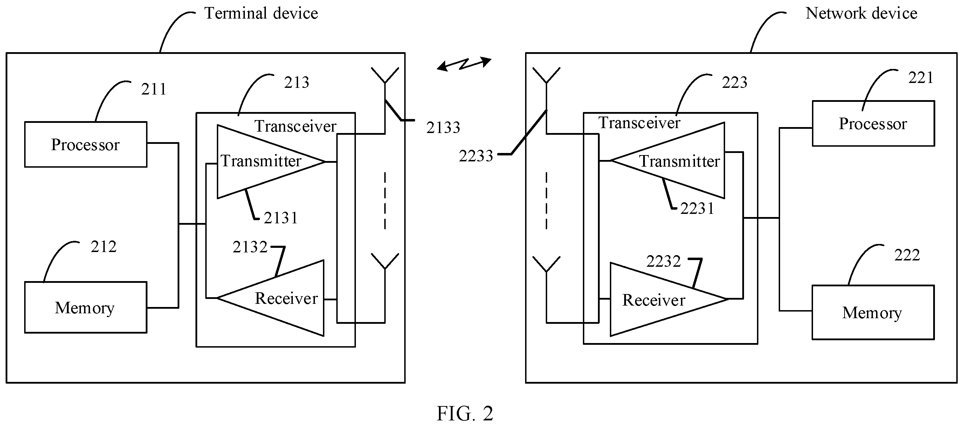

FIG. 2 is a diagram of another communication system to which a method is applicable according to an embodiment of this application. As shown in FIG. 2, a terminal device includes a processor 211, a memory 212, and a transceiver 213. The transceiver 213 includes a transmitter 2131, a receiver 2132, and an antenna 2133. A network device includes a processor 221, a memory 222, and a transceiver 223. The transceiver 223 includes a transmitter 2231, a receiver 2232, and an antenna 2233.

The processor 211, the memory 212, and the transceiver 213 communicate with each other through an internal connection path, and the processor 221, the memory 222, and the transceiver 223 communicate with each other through an internal connection path.

The receiver 2132 may be configured to receive transmission control information through the antenna 2133, and the transmitter 2131 may be configured to send transmission feedback information to the network device through the antenna 2133. The transmitter 2231 may be configured to send the transmission control information to the terminal device through the antenna 2233, and the receiver 2232 may be configured to receive the transmission feedback information sent by the terminal device through the antenna 2233.

In some possible scenarios, the network device in FIG. 2 may have only an uplink receiving function, and does not have a downlink sending function.

It should be noted that FIG. 1 and FIG. 2 are merely simplified diagrams used as examples for ease of understanding. During actual application, the communication system may include a plurality of network devices, or may include a plurality of terminal devices. Quantities of network devices and terminal devices included in the communication system are not limited in embodiments of this application.

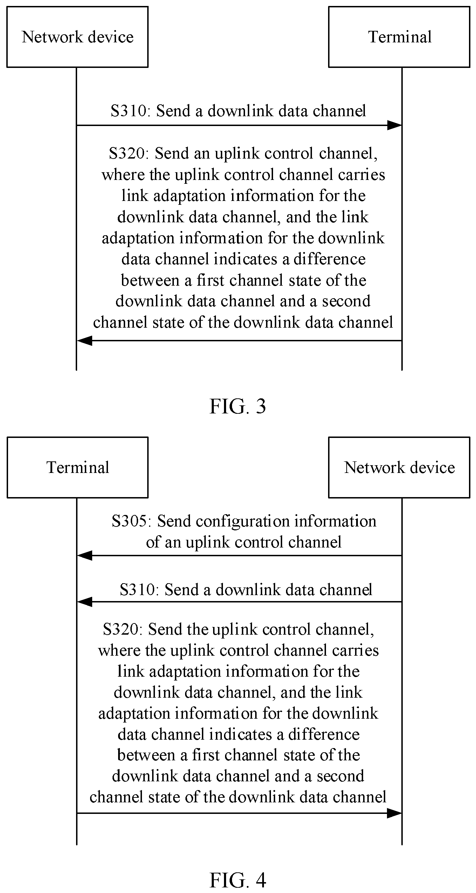

FIG. 3 is a schematic flowchart of a communication method according to an embodiment of this application. As shown in FIG. 3, the method may include S310 and S320.

S310: A network device sends a downlink data channel. Correspondingly, a terminal receives the downlink data channel from the network device.

In an example, the downlink data channel may be a physical downlink shared channel (physical downlink shared channel, PDSCH).

In an example, the network device configures a pilot resource used for CSI measurement for the terminal, and the terminal receives the pilot resource, obtains information such as a downlink precoding matrix indicator (precoding matrix indicator, PMI), a channel quality indicator (channel quality indicator, CQI), and a rank indicator (rank indicator, RI), and reports the information to the network device. The network device determines, based on the CSI reported by the terminal, a solution used for downlink data transmission, or determines a solution used for the downlink data channel for the downlink data transmission, for example, determining an MCS.

S320: The terminal sends an uplink control channel, where the uplink control channel carries link adaptation information for the downlink data channel, and adaptation information for the downlink data channel indicates a difference between a first channel state of the downlink data channel and a second channel state of the downlink data channel. Correspondingly, the network device receives the uplink control channel.

In an example, the uplink control channel may be a physical uplink control channel (physical uplink control channel, PUCCH).

In an example, when the uplink control channel is a PUCCH, the terminal may transmit the PUCCH by using a PUCCH format 0 (format 0), or the terminal may transmit the PUCCH by using a PUCCH format 1 (format 1).

In an example, the first channel state may include one or more of the following parameters: channel quality measured by a demodulation reference signal (demodulation reference signal, DMRS) of the downlink data channel, an actual block error rate (block error rate, BLER) of the downlink data channel, or channel quality at a receiving moment of the downlink data channel.

In an example, the second channel state may include one or more of the following parameters: channel quality referenced during scheduling of the downlink data channel, a target BLER of the downlink data channel, or channel quality corresponding to an MCS scheduled for the downlink data channel.

In an example, from another perspective, the second channel state is a historical channel state of the downlink data channel, that is, a channel state of the downlink data channel at an earlier time, and the first channel state is the current real-time quality of the downlink data channel. When a channel condition changes, there is usually a difference between the second channel state and the first channel state.

In an example, the difference between the first channel state and the second channel state may be quantized as one or more of the following parameters: reference signal received power (reference signal received power, RSRP), a signal-to-interference-plus-noise ratio (signal-to-interference-plus-noise ratio, SINR), a CQI, an MCS, or a BLER.

In other words, the link adaptation information may be indicated by one or more of the following parameters: the RSRP, the SINR, the CQI, the MCS, or the BLER. To be specific, the difference between the first channel state of the downlink data channel and the second channel state of the downlink data channel is indicated by one or more of the following parameters: the RSRP, the SINR, the CQI, the MCS, or the BLER.

In an example, the terminal may obtain real-time channel quality information X1 for current downlink data transmission based on a current PDSCH-DMRS measurement result. It is assumed that channel quality information referenced by the network device for determining an MCS for the current downlink data transmission is X2. In this case, deltX=(X1-X2) or deltX=(X2-X1) may serve as the link adaptation information.

In an example, the terminal may determine, based on a current PDSCH demodulation result, an actual block error rate X1 received on the PDSCH. It is assumed that a target block error rate of the PDSCH is X2. In this case, deltX=(X1-X2) or deltX=(X2-X1) may serve as the link adaptation information.

In an example, the link adaptation information has a mapping relationship with one or more of the following parameters: a sequence cyclic shift value of the uplink control channel, an initial cyclic shift value of the uplink control channel, hybrid automatic repeat request acknowledgment (hybrid automatic repeat request-ACKnowledgement, HARQ-ACK) information for the downlink data channel, a quantity of symbols occupied by the uplink control channel, a quantity of resource blocks (resource blocks, RBs) occupied by the uplink control channel, or a quantity of codewords carried by the downlink data channel.

For ease of description, in this embodiment of this application, one or more parameters that have the mapping relationship with the link adaptation information are collectively referred to as a first parameter.

When there is a mapping relationship between the link adaptation information and the first parameter, the terminal may carry or indicate the link adaptation information via the first parameter. In other words, the terminal device may determine the first parameter based on the mapping relationship and the link adaptation information. The network device may determine the link adaptation information based on the first parameter in the received uplink control channel and the mapping relationship.

When the first parameter includes the HARQ-ACK information, that is, there is a mapping relationship between the link adaptation information and the HARQ-ACK information for the downlink data channel, for example, when the HAQR-ACK information indicates a negative acknowledgment NACK, the link adaptation information may represent that the first channel state of the downlink data channel is worse than the second channel state of the downlink data channel; when the HAQR-ACK information indicates an acknowledgment ACK, the link adaptation information may represent that the first channel state of the downlink data channel is better than the second channel state of the downlink data channel.

In an example, when there is the mapping relationship between the link adaptation information and the first parameter, the uplink control channel may further carry the HARQ-ACK information for the downlink data channel, and there is also a mapping relationship between the HARQ-ACK information and the first parameter. It may be understood that, in this case, the first parameter does not include the HAQR-ACK information.

In an example, when there is a mapping relationship between the link adaptation information and the HARQ-ACK information and the first parameter, and the first parameter includes the sequence cyclic shift value of the uplink control channel, the HAQR-ACK information for the downlink data channel and the link adaptation information may be carried by a same sequence, or the HAQR-ACK information for the downlink data channel and the link adaptation information may be carried by different sequences. An example of a sequence in this embodiment of this application is a ZC sequence (Zadoff-Chu sequence).

For example, when the uplink control channel is the PUCCH, and the terminal sends the PUCCH by using the PUCCH format 0, the HAQR-ACK information for the downlink data channel and the link adaptation information may be carried by a same sequence or different sequences.

It may be understood that, that the HAQR-ACK information for the downlink data channel and the link adaptation information are carried by the same sequence may be understood as follows: The link adaptation information of the uplink control channel and the HARQ-ACK information may be jointly indicated or jointly represented by a same sequence cyclic shift value.

That the link adaptation information of the uplink control channel and the HARQ-ACK information are indicated or represented by different sequence cyclic shift values may be understood as follows: The link adaptation information and the HARQ-ACK information are independently represented based on different sequence cyclic shift values.

The following describes an example of the mapping relationship between the first parameter and the link adaptation information and the HAQR-ACK information. This example applies when: the link adaptation information and the HAQR-ACK information both have a mapping relationship with the first parameter; the first parameter includes the sequence cyclic shift value of the uplink control channel and the quantity of codewords carried by the downlink data channel; the HAQR-ACK information for the downlink data channel and the link adaptation information are carried by the same sequence; the uplink control channel is the PUCCH; and the terminal sends the PUCCH by using the PUCCH format 0.

When the link adaptation information and the HARQ-ACK information are jointly represented by the sequence cyclic shift value, for single-codeword transmission of the downlink data channel, an example mapping relationship between the link adaptation information of the uplink control channel and HARQ-ACK information and the sequence cyclic shift value is shown in Table 1. In this embodiment of this application, deltX1 and deltX2 indicate different link adaptation information.

**Table 1**

| Bit value of HARQ-ACK information, link adaptation information | (0, deltX1) | (0, deltX2) | (1, deltX1) | (1, deltX2) |
|---|---|---|---|---|
| Sequence cyclic shift (sequence cyclic shift) value m_{cs} | m_{cs}=0 | m_{cs}= 3 | m_{cs}=6 | m_{cs}=9 |

The mapping relationship shown in Table 1 is used as an example. If the downlink data channel is a PDSCH, the PDSCH is single-codeword transmission, a bit value of the HARQ-ACK information is 0 (which indicates PDSCH demodulation failure), and the link adaptation information is deltX1, a cyclic shift value for PUCCH transmission may be calculated based on m_{cs}=0 and m₀. If the PDSCH is single-codeword transmission, the bit value of the HARQ-ACK information is 0, and the link adaptation information is deltX2, the cyclic shift value for the PUCCH transmission may be calculated based on m_{cs}=3 and m₀. In summary, when the PDSCH is single-codeword transmission, the terminal can select a corresponding m_{cs} value for the PUCCH transmission based on the link adaptation information, the HARQ-ACK information, and the mapping relationship shown in Table 1, to calculate the cyclic shift value for the PUCCH transmission. In this embodiment of this application, m₀ indicates the initial cyclic shift value.

When the link adaptation information and the HARQ-ACK information are jointly represented by the sequence cyclic shift value, for dual-codeword transmission of the downlink data channel, an example mapping relationship between the link adaptation information of the uplink control channel and HARQ-ACK information and the sequence cyclic shift value is shown in Table 2.

**Table 2**

| Bit value of HARQ-ACK information, link adaptation information | {(0, deltX11), (0, deltX21)} | {(0, deltX12), (0, deltX22) } | {(0, deltX11), (1, deltX21) } | {(0, deltX12), (1, deltX22) } | {(1, deltX11), (1, deltX21) } | {(1, deltX12), (1, deltX22) } | {(1, deltX11), (1, deltX21) } | {(1, deltX12), (1, deltX22) } |
|---|---|---|---|---|---|---|---|---|
| Sequence cyclic shift value m_{cs} | m_{cs}=0 | m_{cs}=1 | m_{cs}= 3 | m_{cs}=4 | m_{cs}=6 | m_{cs}=7 | m_{cs}=9 | m_{cs}= 10 |

The mapping relationship shown in Table 2 is used as an example. If the PDSCH is dual-codeword transmission, the HARQ-ACK information is 00 (which indicates demodulation failure of both codewords of the PDSCH), link adaptation information for a first codeword is deltX11, and link adaptation information for a second codeword is deltX12, a cyclic shift value for PUCCH transmission may be calculated based on m_{cs}=0 and m₀. If the PDSCH is dual-codeword transmission, the HARQ-ACK information is 00, the link adaptation information for the first codeword is deltX12, and the link adaptation information for the second codeword is deltX22, the cyclic shift value for the PUCCH transmission may be calculated based on m_{cs}=1 and m₀. In summary, when the PDSCH is dual-codeword transmission, the terminal device can select a corresponding m_{cs} value for the PUCCH transmission based on the link adaptation information and the HARQ-ACK information, to calculate the cyclic shift value for the PUCCH transmission.

The following describes an example of the mapping relationship between the first parameter and the link adaptation information and the HAQR-ACK information. This example applies when: the link adaptation information and the HAQR-ACK information both have the mapping relationship with the first parameter; the first parameter includes the sequence cyclic shift value of the uplink control channel and the quantity of codewords carried by the downlink data channel; the HAQR-ACK information for the downlink data channel and the link adaptation information are carried by different sequences; the uplink control channel is the PUCCH; and the terminal sends the PUCCH by using the PUCCH format 0.

When the link adaptation information and the HARQ-ACK information are respectively represented based on sequence cyclic shift values, for single-codeword transmission of the downlink data channel, an example mapping relationship between the HARQ-ACK information of the uplink control channel and the sequence cyclic shift value is shown in Table 3, and an example mapping relationship between the link adaptation information of the uplink control channel and the sequence cyclic shift value is shown in Table 4.

**Table 3**

| Bit value of HARQ-ACK information | 0 | 1 |
|---|---|---|
| Sequence cyclic shift value m_{cs} | m_{cs}=0 | m_{cs}=6 |

**Table 4**

| Link adaptation information | deltX1 | deltX2 |
|---|---|---|
| Sequence cyclic shift value m_{cs} | m_{cs}= 3 | m_{cs}=9 |

The mapping relationship shown in Table 3 and Table 4 is used as an example. The terminal configures an initial cyclic shift value m₀ based on radio resource control (radio resource control, RRC). If the PDSCH is single-codeword transmission, the HARQ-ACK information is 0, and the link adaptation information is deltX1, a cyclic shift value a₁ for PUCCH transmission may be calculated based on m_{cs}=0 and m₀, and a cyclic shift value a₂ for the PUCCH transmission may be calculated based on m_{cs}=3 and m₀. A sequence 1 is calculated based on the cyclic shift value a₁, and a sequence 2 is calculated based on the cyclic shift value a₂. The PUCCH is sent by superimposing the sequence 1 and the sequence 2. In summary, the terminal device may select a corresponding m_{cs} value for the PUCCH transmission based on the link adaptation information and the HARQ-ACK information, to calculate cyclic shift values a₁ and a₂ for the PUCCH transmission, and calculate, based on the cyclic shift values a₁ and a₂, sequences sent by the PUCCH.

In another example, RRC is configured with two initial cyclic shift values m₀₁ and m₀₂. If the PDSCH is single-codeword transmission, the HARQ-ACK information is 0, and the link adaptation information is deltX1, a cyclic shift value a₁ for PUCCH transmission may be calculated based on m_{cs}=0 and m₀₁, and a cyclic shift value a₂ for the PUCCH transmission is calculated based on m_{cs}=3 and m₀₂. A sequence 1 is calculated based on the cyclic shift value a₁, and a sequence 2 is calculated based on the cyclic shift value a₂. The PUCCH is sent by superimposing the sequence 1 and the sequence 2. In summary, the terminal device selects a corresponding m_{cs} value for the PUCCH transmission based on the link adaptation information and the HARQ-ACK information, to calculate cyclic shift values a₁ and a₂ for the PUCCH transmission, and calculate, based on the cyclic shift values a₁ and a₂, sequences sent by the PUCCH.

It may be understood that, in the foregoing example, the link adaptation information and the HARQ-ACK information further have a mapping relationship with the initial cyclic shift value. In other words, the first parameter further includes the initial cyclic shift value.

When the link adaptation information and the HARQ-ACK information are respectively represented based on sequence cyclic shift values, for dual-codeword transmission, an example mapping relationship between the HARQ-ACK information of the uplink control channel and the sequence cyclic shift value is shown in Table 5, and an example mapping relationship between the link adaptation information of the uplink control channel and the sequence cyclic shift value is shown in Table 6.

**Table 5**

| Bit value of HARQ-ACK information | {0, 0} | {0, 1} | {1, 1} | {1, 0} |
|---|---|---|---|---|
| Sequence cyclic shift value m_{cs} | m_{cs}=0 | m_{cs}= 3 | m_{cs}=6 | m_{cs}=9 |

**Table 6**

| Link adaptation information | {deltX1, deltX1} | {deltX1, deltX2} | {deltX2, deltX1} | {deltX2, deltX2} |
|---|---|---|---|---|
| Sequence cyclic shift value m_{cs} | m_{cs}=1 | m_{cs}=4 | m_{cs}=7 | m_{cs}=10 |

The mapping relationship shown in Table 3 and Table 4 is used as an example. RRC is configured with an initial cyclic shift value m₀. If the PDSCH is dual-codeword transmission, the HARQ-ACK information is 00, link adaptation information for a first codeword is deltX1, and link adaptation information for a second codeword is deltX1, a cyclic shift value a₁ for PUCCH transmission is calculated based on m_{cs}=0 and m₀, and a cyclic shift value a₂ for the PUCCH transmission is calculated based on m_{cs}=1 and m₀. A sequence 1 is calculated based on the cyclic shift value a₁, and a sequence 2 is calculated based on the cyclic shift value a₂. The PUCCH is sent by superimposing the sequence 1 and the sequence 2. In summary, the terminal device selects a corresponding m_{cs} value for the PUCCH transmission based on the link adaptation information and the HARQ-ACK information, to calculate cyclic shift values a₁ and a₂ for the PUCCH transmission, and calculate, based on the cyclic shift values a₁ and a₂, sequences sent by the PUCCH.

In another example, RRC is configured with two initial cyclic shift values m₀₁ and m₀₂. If the PDSCH is dual-codeword transmission, the HARQ-ACK information is 00, link adaptation information for a first codeword is deltX1, and link adaptation information for a second codeword is deltX1, a cyclic shift value a₁ for PUCCH transmission is calculated based on m_{cs}=0 and m₀₁, and a cyclic shift value a₂ for the PUCCH transmission is calculated based on m_{cs}=1 and m₀₂.A sequence 1 is calculated based on the cyclic shift value a₁, and a sequence 2 is calculated based on the cyclic shift value a₂. The PUCCH is sent by superimposing the sequence 1 and the sequence 2. In summary, the terminal device selects a corresponding m_{cs} value for the PUCCH transmission based on the link adaptation information and the HARQ-ACK information, to calculate cyclic shift values a₁ and a₂ for the PUCCH transmission, and calculate, based on the cyclic shift values a₁ and a₂, sequences sent by the PUCCH.

The following describes an example of the mapping relationship between the first parameter and the link adaptation information and the HAQR-ACK information. This example applies when: the link adaptation information and the HAQR-ACK information both have the mapping relationship with the first parameter; the first parameter includes the sequence cyclic shift value of the uplink control channel; a quantity of symbols occupied by the downlink data channel, and a quantity of codewords corresponding to the downlink data signal; the uplink control channel is the PUCCH; and the terminal sends the PUCCH by using the PUCCH format 0.

For single-codeword transmission, a parameter "a quantity of symbols (nrofSymbols)" configured for the PUCCH is 2, and an example mapping relationship between the link adaptation information and HARQ-ACK information and the first parameter is shown in Table 7.

**Table 7**

| Bit value of HARQ-ACK information, link adaptation information | (0, deltX1) | (0, deltX2) | (1, deltX1) | (1, deltX2) |
|---|---|---|---|---|
| Sequence cyclic shift value m_{cs} (symbol 1) | m_{cs}=0 | m_{cs}=0 | m_{cs}=6 | m_{cs}=6 |
| Sequence cyclic shift value m_{cs} (symbol 2) | m_{cs}=0 | m_{cs}=3 | m_{cs}=6 | m_{cs}=9 |

The mapping relationship shown in Table 7 is used as an example. RRC is configured with an initial cyclic shift value m₀. If the PDSCH is single-codeword transmission, the HARQ-ACK information is 0, and the link adaptation information is deltX1, a cyclic shift value for PUCCH transmission on the first symbol (namely, the symbol 1 or the symbol 1) is calculated based on m_{cs}=0 and m₀, and a cyclic shift value for the PUCCH transmission on the second symbol (namely, the symbol 2 or the symbol 2) is calculated based on m_{cs}=0 and m₀. In summary, the terminal device selects a corresponding m_{cs} value for the PUCCH transmission based on the link adaptation information and the HARQ-ACK information, to separately calculate the cyclic shift value for the PUCCH transmission on the first symbol and the cyclic shift value for the PUCCH transmission on the second symbol.

For dual-codeword transmission, when a parameter "a quantity of symbols (nrofSymbols)" configured for the PUCCH is equal to 2, an example mapping relationship between the link adaptation information and HARQ-ACK information and the first parameter is shown in Table 8.

**Table 8**

| Bit value of HARQ-ACK information, link adaptation information | {(0, deltX11), (0, deltX21) } | {(0, deltX12), (0, deltX22) } | {(0, deltX11), (1, deltX21) } | {(0, deltX12), (1, deltX22) } | {(1, deltX11), (0, deltX21) } | {(1, deltX12), (0, deltX22) } | {(1, deltX11), (1, deltX21) } | {(1, deltX12), (1, deltX22) } |
|---|---|---|---|---|---|---|---|---|
| Sequence cyclic shift value m_{cs} (symbol 1) | m_{cs}=0 | m_{cs}=0 | m_{cs}= 3 | m_{cs}= 3 | m_{cs}=6 | m_{cs}=6 | m_{cs}=9 | m_{cs}=9 |
| Sequence cyclic shift value m_{cs} (symbol 2) | m_{cs}=0 | m_{cs}=1 | m_{cs}= 3 | m_{cs}=4 | m_{cs}=6 | m_{cs}=7 | m_{cs}=9 | m_{cs}= 10 |

The mapping relationship shown in Table 8 is used as an example. RRC is configured with an initial cyclic shift value m₀. If the PDSCH is dual-codeword transmission, the HARQ-ACK information is 00, link adaptation information for a first codeword is deltX1, and link adaptation information for a second codeword is deltX1, a cyclic shift value for PUCCH transmission on the first symbol may be calculated based on m_{cs}=0 and m₀, and a cyclic shift value for the PUCCH transmission on the second symbol is calculated based on m_{cs}=0 and m₀. In summary, the terminal device selects a corresponding m_{cs} value for the PUCCH transmission based on the link adaptation information and the HARQ-ACK information, to separately calculate the cyclic shift value for the PUCCH transmission on the first symbol and the cyclic shift value for the PUCCH transmission on the second symbol.

The following describes an example of the mapping relationship between the first parameter and the link adaptation information and the HAQR-ACK information. This example applies when: the link adaptation information and the HAQR-ACK information both have the mapping relationship with the first parameter; the first parameter includes the sequence cyclic shift value of the uplink control channel and the quantity of RBs occupied by the downlink data channel; the uplink control channel is the PUCCH; and the terminal sends the PUCCH by using the PUCCH format 0. The RB includes RBs that can be occupied by transmission of a plurality of PUCCHs configured by the network device for the terminal.

For single-codeword transmission, a quantity of candidate RB positions that can be occupied by transmission of the PUCCH configured by the network device for the terminal device is 2 (that is, the quantity of RBs is 2), and a mapping relationship between the first parameter and the link adaptation information and HARQ-ACK information is shown in Table 9. It may be understood that the mapping relationship in Table 9 further includes a mapping relationship between the link adaptation information and an RB position.

**Table 9**

| Bit value of HARQ-ACK information, link adaptation information | (0, deltX1) | (0, deltX2) | (1, deltX1) | (1, deltX2) |
|---|---|---|---|---|
| Sequence cyclic shift value m_{cs} | m_{cs}=0 | m_{cs}=0 | m_{cs}=6 | m_{cs}=6 |
| Resource block position | RB #0 | RB #1 | RB #0 | RB #1 |

When the uplink control channel is the PUCCH, and the terminal sends the PUCCH by using the PUCCH format 1, the mapping relationship shown in Table 9 is used as an example. RRC is configured with an initial cyclic shift value m₀. If the PDSCH is single-codeword transmission, the HARQ-ACK information is 0, and the link adaptation information is deltX1, a cyclic shift value for PUCCH transmission may be calculated based on m_{cs}=0 and m₀, and RB #0 is selected for sending the PUCCH. In summary, the terminal device selects a corresponding m_{cs} value for the PUCCH transmission based on the link adaptation information and the HARQ-ACK information, and calculates the cyclic shift value for the PUCCH transmission and a resource block position occupied by the PUCCH.

For dual-codeword transmission, a quantity of candidate RB positions that can be occupied by transmission of the PUCCH configured by the network device for the terminal device is 2, and an example mapping relationship between the first parameter and the link adaptation information and HARQ-ACK information is shown in Table 10.

**Table 10**

| Bit value of HARQ-ACK information, link adaptation information | {(0, deltX11), (0, deltX21) } | {(0, deltX12), (0, deltX22) } | {(0, deltX11), (1, deltX21) } | {(0, deltX12), (1, deltX22) } | {(1, deltX11), (0, deltX21) } | {(1, deltX12), (0, deltX22) } | {(1, deltX11), (1, deltX21) } | {(1, deltX12), (1, deltX22) } |
|---|---|---|---|---|---|---|---|---|
| Sequence cyclic shift value m_{cs} | m_{cs}=0 | m_{cs}=0 | m_{cs}= 3 | m_{cs}= 3 | m_{cs}=6 | m_{cs}=6 | m_{cs}=9 | m_{cs}=9 |
| Resource block position | RB #0 | RB #1 | RB #0 | RB #1 | RB #0 | RB #1 | RB #0 | RB #1 |

When the uplink control channel is the PUCCH, and the terminal sends the PUCCH by using the PUCCH format 1, the mapping relationship shown in Table 9 is used as an example. RRC is configured with an initial cyclic shift value m₀. If the PDSCH is dual-codeword transmission, HARQ-ACK information bits are 00 (demodulation failure of both codewords of the PDSCH), link adaptation information for a first codeword is deltX1, and link adaptation information for a second codeword is deltX1, a cyclic shift value for PUCCH transmission is calculated based on m_{cs}=0 and m₀, and a resource block #0 is selected for sending the PUCCH. The rest may be deduced by analogy. The terminal device selects a corresponding m_{cs} value for the PUCCH transmission based on the link adaptation information and the HARQ-ACK information, and calculates the cyclic shift value for the PUCCH transmission and a resource block position occupied by the PUCCH.

In another example, when the uplink control channel carries both the HAQR-ACK information for the downlink data channel and the link adaptation information, the uplink control channel is the PUCCH, and the terminal sends the PUCCH by using the PUCCH format 1.

The following describes an example of the mapping relationship, between the first parameter and the link adaptation information. This example applies when: the link adaptation information and the first parameter have the mapping relationship; the first parameter includes the sequence cyclic shift value and a codeword level of the uplink control channel; the uplink control channel is the PUCCH; and the terminal sends the PUCCH by using the PUCCH format 1.

For single-codeword transmission, an example mapping relationship between the link adaptation information and the first parameter is shown in Table 11.

**Table 11**

| Link adaptation information | deltX1 | deltX2 |
|---|---|---|
| Sequence cyclic shift value m_{cs} | m_{cs}=0 | m_{cs}=6 |

The mapping relationship shown in Table 11 is used as an example. RRC is configured with an initial cyclic shift value m₀. If the PDSCH is single-codeword transmission, and link adaptation information for a codeword is deltX1, a cyclic shift value for PUCCH transmission may be calculated based on m_{cs}=0 and m₀, and a corresponding sequence is selected and reported together with the HARQ-ACK information to the network device. In summary, the terminal device selects a corresponding m_{cs} value for the PUCCH transmission based on the link adaptation information, calculates the cyclic shift value for the PUCCH transmission, and selects a sequence used for sending the PUCCH.

For dual-codeword transmission, an example mapping relationship between the link adaptation information and the first parameter is shown in Table 12.

**Table 12**

| Link adaptation information | {deltX1, deltX1} | {deltX1, deltX2} | {deltX2, deltX1} | {deltX2, deltX2} |
|---|---|---|---|---|
| Sequence cyclic shift value m_{cs} | m_{cs}=0 | m_{cs}= 3 | m_{cs}=6 | m_{cs}=9 |

The mapping relationship shown in Table 12 is used as an example. RRC is configured with an initial cyclic shift value m₀. If the PDSCH is dual-codeword transmission, link adaptation information for a first codeword is deltX1, and link adaptation information for a second codeword is deltX1, a cyclic shift value for PUCCH transmission may be calculated based on m_{cs}=0 and m₀, and a corresponding sequence is selected and reported together with the HARQ-ACK information to the network device. In summary, the terminal device selects a corresponding m_{cs} value for the PUCCH transmission based on the link adaptation information, calculates the cyclic shift value for the PUCCH transmission, and selects a sequence used for sending the PUCCH.

The following describes an example of the mapping relationship between the first parameter and the link adaptation information. This example applies when the link adaptation information and the first parameter have the mapping relationship; the first parameter includes the sequence cyclic shift value and the initial cyclic shift value of the uplink control channel; the uplink control channel is the PUCCH; and the terminal sends the PUCCH by using the PUCCH format 1.

In this example, a plurality of initial cyclic shift parameter values may be configured for the terminal via RRC signaling, and different initial cyclic shift parameter values represent link adaptation information for different codewords. For example, an initial cyclic shift value is m₀₁ and represents link adaptation information for a codeword 0, and an initial cyclic shift value is m₀₂ and represents link adaptation information for a codeword 1.

For single-codeword transmission of the downlink data channel, an example mapping relationship between codeword-level link adaptation information of the uplink control channel and the sequence cyclic shift value is shown in Table 13.

**Table 13**

| Link adaptation information | deltX1 | deltX2 |
|---|---|---|
| Sequence cyclic shift value m_{cs} | m_{cs}=0 | m_{cs}=6 |

The mapping relationship shown in Table 13 is used as an example. If the PDSCH is dual-codeword transmission, link adaptation information for a first codeword is deltX1, and link adaptation information for a second codeword is deltX1, a cyclic shift value a₁ for PUCCH transmission may be calculated based on m_{cs}=0 and m₀₁, and a cyclic shift value a₂ for the PUCCH transmission is calculated based on m_{cs}=0 and m₀₂.A sequence 1 is calculated based on the cyclic shift value a₁, and a sequence 2 is calculated based on the cyclic shift value a₂. The sequence 1 and the sequence 2 are superimposed and reported together with the HARQ-ACK information to the network device. In summary, the terminal device selects a corresponding m_{cs} value for the PUCCH transmission based on the link adaptation information, calculates the cyclic shift value for the PUCCH transmission, and selects a sequence used for sending the PUCCH.

In this embodiment of this application, for example, when link adaptation information "deltX" and HARQ-ACK information "0" are reported to the network device together, it may indicate that a first channel state of the PDSCH is worse than or equal to a second channel state of the PDSCH. In this case, to ensure correct reception of the downlink data transmission, the network device can reduce an MCS for data transmission. When link adaptation information "deltX" and HARQ-ACK information "1" are reported to the network device together, it indicates that the first channel state of the PDSCH is better than the second channel state of the PDSCH. In this case, to improve downlink data transmission efficiency, the network device can adjust the MCS upward for the data transmission.

In this embodiment of this application, for example, deltX2≥deltX1≥0.

In this embodiment of this application, in an example of quantizing the link adaptation information, the link adaptation information deltX is quantized to deltX1 or deltX2. A quantization manner is as follows: If |deltX| is less than |deltX2|, deltX is quantized to deltX1; or otherwise, deltX is quantized to deltX2. Another quantization manner is as follows: If ∥deltX|-|deltX1∥ is less than ∥deltX|-|deltX2∥, deltX is quantized to deltX1; or otherwise, deltX is quantized to deltX2. " 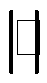 " indicates an absolute value operation.

In this embodiment of this application, function definitions of the existing PUCCH format 0 and PUCCH format 1 may be extended, so that link adaptation information "a difference between channel quality measured by a DMRS for the downlink data channel and channel quality referenced during scheduling of downlink data channel " can be additionally fed back in an ACK/NACK mechanism. This helps accelerate MCS convergence during scheduling of the downlink data channel, reduce a transmission delay of service data, reduce a quantity of data retransmissions, and finally save spectrum resources.

As shown in FIG. 4, the communication method in this embodiment of this application may further include S305.

S305: The network device sends configuration information of the uplink control channel. Correspondingly, the terminal receives the configuration information from the network device.

In an example, the configuration information of the uplink control channel may be referred to as an uplink control channel parameter. For example, when the uplink control channel is the PUCCH, the configuration information of the uplink control channel may be referred to as a PUCCH parameter.

In an example, the configuration information may include one or more of the following parameters: an initial cyclic shift value (initialCyclicShift), a quantity of symbols (nrofSymbols), a quantity of resource blocks (nrofPRBs), and a resource block position.

The initial cyclic shift value may be denoted as m₀. The parameter may be used to calculate a sequence cyclic shift value used for transmitting the PUCCH carrying the HARQ-ACK information, or may be used to calculate a sequence cyclic shift value used for transmitting the PUCCH carrying the link adaptation information.

Optionally, the initial cyclic shift value may be one or more values. When the initial cyclic shift value is one value, a cyclic shift sequence used for PUCCH transmission may be calculated by the HAQR-ACK information and the link adaptation information based on a same initial cyclic shift value. When the initial cyclic shift value is a plurality of values, a cyclic shift value of a transmission sequence may be calculated by the PUCCH transmission carrying the HAQR-ACK information based on a first initial cyclic shift parameter m₀₁, the cyclic shift value of the transmission sequence may be calculated by the PUCCH transmission carrying the link adaptation information based on a second initial cyclic shift m₀₂, and the cyclic shift value of the transmission sequence may be calculated by the PUCCH transmission carrying both the HAQR-ACK information and the link adaptation information based on a third initial cyclic shift m₀₃.

The quantity of symbols is used to determine a quantity of symbols occupied by the PUCCH transmission. The quantity of resource blocks is used to determine a quantity of frequency domain resource blocks occupied by the PUCCH transmission. The resource block position is used to determine a frequency domain resource position that can be occupied by the PUCCH transmission, and there may be one or more resource block positions.

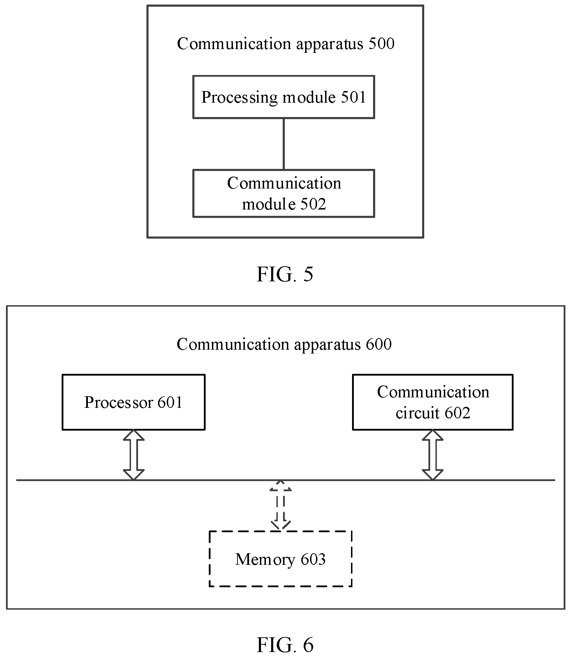

FIG. 5 is a diagram of a structure of a communication apparatus according to an embodiment of this application. As shown in FIG. 5, the apparatus 500 may include a processing module 501 and a communication module 502.

In a first example, the apparatus 500 may be configured to implement the communication method implemented by the terminal in any one of embodiments shown in FIG. 3 and FIG. 4. For example, the processing module 501 is configured to implement processing-related steps performed by the terminal device in any one of embodiments shown in FIG. 3 and FIG. 4, and the communication module 502 is configured to implement steps such as sending and/or receiving performed by the terminal device in any one of embodiments shown in FIG. 3 and FIG. 4.

In a second example, the apparatus 500 may be configured to implement the communication method implemented by the network device in any one of embodiments shown in FIG. 3 and FIG. 4. For example, the processing module 501 is configured to implement processing-related steps performed by the network device in any one of embodiments shown in FIG. 3 and FIG. 4, and the communication module 502 is configured to implement steps such as sending and/or receiving performed by the network device in any one of embodiments shown in FIG. 3 and FIG. 4.

FIG. 6 is a diagram of a structure of a communication apparatus according to another embodiment of this application. As shown in FIG. 6, the apparatus 600 includes a processor 601 and a communication circuit 602. The processor 601 and the communication circuit 602 are coupled to each other. It may be understood that the communication circuit 602 may be a transceiver or an input/output interface. Optionally, the apparatus 600 may further include a memory 603, configured to store instructions executed by the processor 601, store input data required by the processor 601 to execute the instructions, or store data generated after the processor 601 executes the instructions. It may be understood that the memory 603 may be located outside the processor 601, or may be located inside the processor 601.

For example, the processor 601 is configured to implement a function of the processing module 501, and the communication circuit 602 is configured to implement a function of the communication module 502.

The apparatus 600 may be a communication device, or may be a chip used in a communication device. For example, the apparatus 600 may be UE or a chip used in UE, or may be a network device or a chip used in a network device. It may be understood that when the apparatus 600 is UE or a network device, the communication circuit 602 may be a transceiver.

Some embodiments of this application further provide a computer program product. When the computer program product is run on a processor, the method implemented by the terminal device in any one of the foregoing embodiments may be implemented, or the method implemented by the network device in any one of the foregoing method embodiments may be implemented.

Some embodiments of this application further provide a computer-readable storage medium. The computer-readable storage medium includes computer instructions. When the computer instructions are run on a processor, the method implemented by the terminal device in any one of the foregoing embodiments may be implemented, or the method implemented by the network device in any one of the foregoing method embodiments may be implemented.

In some embodiments of this application, a communication system is further provided. The system may implement the method implemented by the terminal device and the network device in any one of the foregoing embodiments.

It may be understood that the processor in embodiments of this application may be the following component or all or some of circuits configured for a function of processing in the following component: a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general purpose processor may be a microprocessor or any regular processor.

The method steps in embodiments of this application may be implemented by hardware, or may be implemented by the processor by executing software instructions. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or a storage medium in any other form well-known in the art. For example, a storage medium is coupled to the processor, so that the processor is enabled to read information from the storage medium and write information into the storage medium. Certainly, the storage medium may alternatively be a component of the processor. The processor and the storage medium may be disposed in the ASIC. In addition, the ASIC may be located in a network device or a terminal device. Certainly, the processor and the storage medium may alternatively exist as discrete components in the network device or the terminal device.

All or some of the foregoing embodiments may be implemented by using software, hardware, firmware, or any combination thereof. When the software is used to implement embodiments, all or some of embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by a computer, or a data storage device, for example, a server or a data center, integrating one or more usable media. The usable medium may be a magnetic medium, for example, a floppy disk, a hard disk, or a magnetic tape; may be an optical medium, for example, a digital video disc; or may be a semiconductor medium, for example, a solid state drive.

In embodiments of this application, unless otherwise specified or there is a logic conflict, terms and/or descriptions between different embodiments are consistent and may be mutually referenced, and technical features in different embodiments may be combined into a new embodiment based on an internal logical relationship thereof.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A communication method, applied to a terminal, wherein the method comprises:
receiving a downlink data channel; and
sending an uplink control channel, wherein the uplink control channel carries link adaptation information, and the link adaptation information indicates a difference between a first channel state of the downlink data channel and a second channel state of the downlink data channel.

2. The method according to claim 1, wherein the first channel state comprises one or more of the following parameters: channel quality measured by a demodulation reference signal DMRS for the downlink data channel, an actual block error rate BLER of the downlink data channel, or channel quality at a receiving moment of the downlink data channel.

3. The method according to claim 1, wherein the second channel state comprises one or more of the following parameters: channel quality referenced during scheduling of the downlink data channel, a target block error rate BLER of the downlink data channel, or channel quality corresponding to a modulation and coding scheme MCS scheduled for the downlink data channel.

4. The method according to any one of claims 1 to 3, wherein the difference between the first channel state and the second channel state is quantized as one or more of the following parameters: reference signal received power RSRP, a signal-to-interference-plus-noise ratio SINR, a channel quality indicator CQI, an MCS, or a block error rate BLER.

5. The method according to any one of claims 1 to 4, wherein the link adaptation information has a mapping relationship with one or more of the following parameters: a sequence cyclic shift value of the uplink control channel, an initial cyclic shift value of the uplink control channel, hybrid automatic repeat request acknowledgment HARQ-ACK information for the downlink data channel, a quantity of symbols occupied by the uplink control channel, a quantity of resource blocks RBs occupied by the uplink control channel, or a quantity of codewords carried by the downlink data channel.

6. The method according to claim 5, wherein when the HAQR-ACK information indicates a negative acknowledgment NACK, the link adaptation information represents that the first channel state of the downlink data channel is worse than the second channel state of the downlink data channel; when the HAQR-ACK information indicates an acknowledgment ACK, the link adaptation information represents that the first channel state of the downlink data channel is better than the second channel state of the downlink data channel.

7. The method according to claim 5, wherein the HAQR-ACK information for the downlink data channel and the link adaptation information are carried by a same sequence.

8. The method according to claim 5, wherein the HAQR-ACK information for the downlink data channel and the link adaptation information are carried by different sequences.

9. The method according to claim 7 or 8, wherein a relationship between a cyclic shift value mapped to the link adaptation information and a cyclic shift value mapped to the HAQR-ACK information for the downlink data channel is as follows: mapped initial cyclic shift values are the same, and mapped sequence shift values are different; or mapped initial cyclic shift values are different, and mapped sequence shift values are different.

10. The method according to claim 5, wherein when the quantity of symbols occupied by the uplink control channel is greater than 1, different symbols are sent via a same sequence.

11. The method according to claim 5, wherein when the quantity of symbols occupied by the uplink control channel is greater than 1, different symbols are sent via different sequences.

12. The method according to claim 5, wherein when the quantity of codewords carried by the downlink data channel is greater than 1, different codewords correspond to same link adaptation information.

13. The method according to claim 5, wherein when the quantity of codewords carried by the downlink data channel is greater than 1, different codewords correspond to different link adaptation information.

14. The method according to claim 5, wherein a plurality of RBs are allocated to the uplink control channel, and sending the downlink control channel comprises:
selecting, based on the HAQR-ACK information and the link adaptation information, an RB from the plurality of RBs to send the uplink control channel.

15. A communication apparatus, comprising a functional module configured to implement the method according to any one of claims 1 to 12.

16. A communication apparatus, comprising a memory and a processor, wherein the memory is configured to store program instructions, and the processor is configured to execute the program instructions in the memory, to implement the method according to any one of claims 1 to 12.

17. A computer-readable storage medium, wherein the computer-readable storage medium stores program code to be executed by a computer, and the program code comprises instructions for implementing the method according to any one of claims 1 to 12.
